# EUROPÄISCHE PATENTSCHRIFT

(11) **EP 1 378 194 B1**
(45) Veröffentlichungstag und Bekanntmachung des Hinweises auf die Patenterteilung: **13.10.2004**
(21) Anmeldenummer: 03405349.6
(22) Anmeldetag: 20.05.2003
(51) Int. Cl.: A47J 31/60, B08B 7/02, C02F 1/36, F24D 19/00, F28G 7/00

(54) **Getränkebereiter mit einem Wassererhitzer und mit einer Vorrichtung gegen Kesselsteinablagerung**
Beverage making machine with a water heater and with a device to prevent scale deposits
Appareil de préparation de boissons avec un chauffe-eau et avec un dispositif pour inhiber l'entartrage

(30) Priorität: 29.05.2002 DE 10223903
(43) Veröffentlichungstag der Anmeldung: 07.01.2004
(73) Patentinhaber: Fianara International B.V., 1079 LH Amsterdam (NL)
(72) Erfinder: Meineke, Helmut, 78253 Eigeltingen (DE); Keller, Peter, 8887 Mels (CH)
(74) Vertreter: Rottmann, Maximilian R.

(56) Entgegenhaltungen:
- DE-A- 2 919 110
- FR-A- 2 586 322
- GB-A- 2 227 254

## Beschreibung

Die Erfindung betrifft einen nach dem Oberbegriff des Anspruchs 1 ausgebildeten Getränkebereiter mit einem Wassererhitzer und mit einer Vorrichtung gegen Kesselsteinablagerung.

Als Getränkebereiter der hier zur Rede stehenden Art können beispielsweise Kaffeemaschinen, insbesondere Espressokaffeemaschinen genannt werden. Diese Maschinen finden im gewerblichen Bereich, z.B. in Gaststätten, Betriebskantinen und dergleichen Anwendung. Im Prinzip gleiche oder ähnliche Geräte werden vermehrt auch im Haushalt eingesetzt.

Aus der DE 2919110 A1 ist eine Kaffeemaschine mit einem Heisswasserbehälter bekannt, die mit einer Einrichtung gegen Kesselsteinablagerung versehen ist. Diese Einrichtung besteht aus einem Ultraschallschwingungen erzeugenden Gerät, das an oder im Heisswasserbehälter angeordnet ist. Bedingt durch die für Ultraschall ungünstigen Formen und Materialien des Wassererhitzers ist der Wirkungsgrad des Ultraschalls bei dieser Kaffeemaschine jedoch nicht optimal. Bei zu geringer Schalleistung kann es trotzdem zur Ablagerung von Kesselstein kommen. Wird hingegen die Leistung so hoch gewählt, so dass an allen Stellen sicher die Kalkablagerung verhindert wird, ist das eine unnötige Belastung für die verwendeten Materialien. Es kann zu vorzeitiger Materialalterung kommen, und es findet eine starke Schallausstrahlung in die Umgebung statt. Beim Einsatz mehrerer Kaffeemaschinen in einem Raum kommt es zu Überlagerungen der Schallwellen, was zur Entstehung von hörbaren, sehr störenden Schallwellen führen kann.

Die mit der vorliegenden Erfindung zu lösende Aufgabe besteht nun darin, einen Getränkebereiter der im Oberbegriff des Patentanspruchs 1 genannten Art derart zu verbessern, dass mit möglichst geringer Schalleistung eine ausreichende Wirkung gegen die Bildung von Kesselstein erlangt wird.

Diese Aufgabe wird durch die im Kennzeichen des Patentanspruchs 1 aufgeführten Merkmale gelöst.

Voraussetzung für eine optimale Wirkung bei möglichst geringer Schalleistung ist, dass eine gute Anpassung des Schalls an die durch Kesselsteinablagerungen gefährdeten Teile erfolgt. Eine optimale Wirkung kann dadurch erzielt werden, dass der Wassererhitzer bzw. das Gebilde, das aus den mechanischen Teilen des Wassererhitzers sowie den form- und kraftschlüssig damit verbundenen Elementen der Vorrichtung (Ultraschallgeber, Ultraschallempfänger) besteht, mit dem Schall in dessen Eigenfrequenz angeregt wird. Falls dieses Gebilde in der Eigenfrequenz betrieben wird, ist die abgestrahlte Leistung sowie die aufgenommene elektrische Leistung maximal.

Vorteilhafte Ausbildungen der Erfindung sind in den abhängigen Ansprüchen 2 bis 10 definiert.

Im Anspruch 6 wird vorgeschlagen, dass die Vorrichtung gegen Kesselsteinablagerung zusätzlich einen direkt oder indirekt mit dem Wassererhitzer gekoppelten Ultraschallempfänger sowie einen Verstärker aufweist, dessen Verstärkereingang mit dem Ultraschallempfänger und dessen Verstärkerausgang mit dem Ultraschallsender verbunden ist. Durch den Empfang der ausgesendeten Schallwellen und ihrer verstärkten Aussendung entsteht eine Rückkopplung, mittels welcher sichergestellt werden kann, dass der Wassererhitzer derart angeregt wird, dass dieser in seiner Eigenfrequenz schwingt. Die Schallleistung wird dadurch optimal genutzt und kann geringer gehalten werden, als es für die gleiche Wirkung ohne Resonanz nötig wäre.

Eine weitere vorteilhafte Ausgestaltung der Erfindung ist im Patentanspruch 7 angegeben. Durch den Einsatz von wärmedämmenden, schalleitendem Material zwischen dem Ultraschallsender und dem Ultraschallempfänger und der Aussenwandung des Wassererhitzers wird die Wärmebeanspruchung der Schallquelle und des Ultraschallempfängers verringert. Dadurch können Ultraschallsender und Ultraschallempfänger mit geringerer zulässiger Betriebstemperatur zum Einsatz kommen.

Durch die Anwendung von Glas oder Keramikmaterial nach Anspruch 8 wird die Schallleitung und Wärmedämmung besonders kostengünstig möglich.

Durch eine Montage wie im Anspruch 9 kann der Ultraschallsensor und der Ultraschallempfänger als eine Baueinheit montiert werden. Es ist nur eine Übergangsstelle für den Ultraschall zum Wassererhitzer nötig.

Durch die Ausgestaltung der Erfindung nach Anspruch 10 kann der Schall gezielt an den Stellen eingespeist werden, wo mit einer erhöhten Gefährdung durch Kesselsteinablagerung zu rechnen ist. Die Wirksamkeit des Schalls wird dadurch an diesen Stellen erhöht.

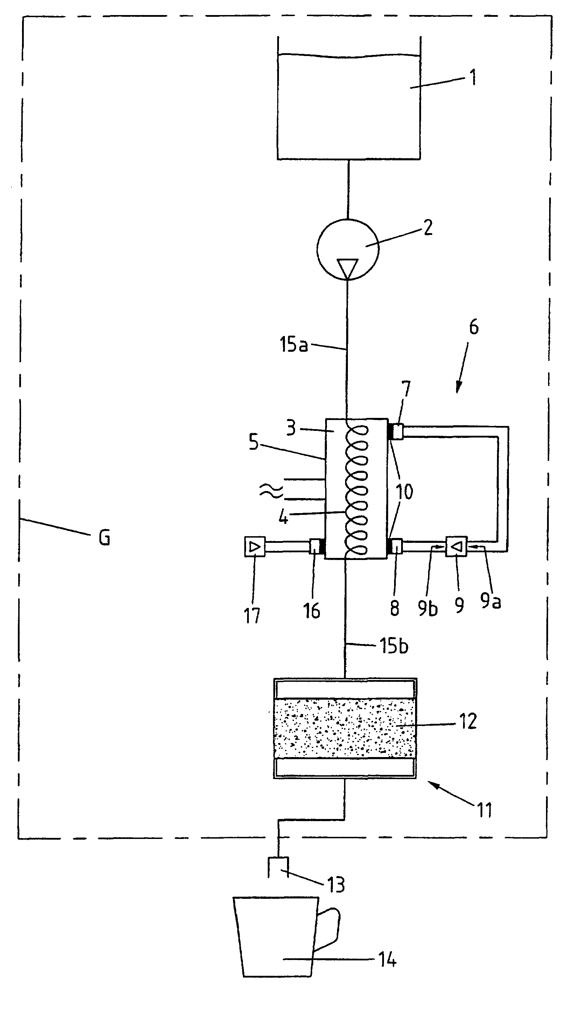

Ein Ausführungsbeispiel der Erfindung ist in der einzigen Zeichnung dargestellt und wird im Folgenden näher beschrieben.

Aus der Zeichnung geht eine schematisch dargestellte Kaffeemaschine zur Herstellung von Espressokaffe hervor. Diese Kaffeemaschine weist im wesentlichen einen Frischwassertank 1, eine Förderpumpe 2, einen Wassererhitzer 3, eine generell mit dem Bezugszeichen 6 versehene Vorrichtung gegen Kesselsteinablagerung, sowie eine Brühkammer 11 auf. Das andeutungsweise eingezeichnete Gehäuse ist mit G bezeichnet. Im weiteren ist ein Getränkeauslass 13 sowie eine sich darunter befindliche Tasse 14 eingezeichnet.

Vom Frischwassertank 1 wird kaltes Wasser über die Förderpumpe 2 und die Leitung 15a in den als Durchlauferhitzer ausgebildeten Wassererhitzer 3 gefördert. Das erhitzte Wasser strömt über die Leitung 15b in die Brühkammer 11 ein, wo es das darin aufgenommene und verdichtete Kaffeepulver 12 extrahiert, um danach als fertiges Kaffeegetränk über den Getränkeauslass 13 in die Kaffeetasse 14 einzuströmen.

Die Vorrichtung 6 gegen Kesselsteinablagerung ist mit einem Ultraschallempfänger 7, einem Ultraschallsender 8 sowie einem Verstärker 9 versehen, Der Verstärkereingang 9a ist mit dem Ultraschallempfänger 7 und der Verstärkerausgang 9b mit dem Ultraschallsender 8 verbunden.

Die Wirkungsweise der erfindungsgemäßen Vorrichtung 6 besteht darin, dass die erzeugten Ultraschallschwingungen vom Ultraschallsender 8 den beim Erhitzen des Wassers ausfallenden Kalk daran hindert, sich an der Heizung 4 oder den Wänden 5 des Wassererhitzers 3 abzulagern. Die vom Ultraschallsender 8 abgegebenen Schwingungen werden durch den Ultraschallempfänger 7 aufgenommen. Der Verstärker 9 verstärkt diese aufgenommenen Schwingungen und gibt sie phasengleich über den Ultraschallsender 8 verstärkt wieder ab. Dadurch, dass die Schwingungen wieder durch den Ultraschallempfänger 7 empfangen und erneut dem Verstärker 9 zugeführt werden, schwingt das Gebilde selbstständig. Es stellt sich die Frequenz ein, bei der die geringste Dämpfung für das gesamte System besteht. Die Grundfrequenz wird durch die Resonanzfrequenz des Ultraschallsenders 8 und des Ultraschallempfängers 7 vorgegeben. Die Resonanzfrequenz vom Ultraschallsender 8 und vom Ultraschallempfänger 7 müssen für eine optimale Funktion annähernd gleich sein.

Der Verstärker 9 sollte ein Selektivverstärker für die Resonanzfrequenz des Ultraschallsenders 8 oder mindestens ein Verstärker sein, der eine gute Verstärkung für diese Frequenz besitzt. Die geringste Dämpfung für das gesamte Ultraschallsystem besteht, wenn sich das Gebilde, bestehend aus Ultraschallsender 8, Wassererhitzer 3, Ultraschallempfänger 7 und Verstärker 9 mit der Ultraschallfrequenz in bester Übereinstimmung befindet. Die schwingenden Teile haben für die Schalleistung die grösste Amplitude. Verändern sich diese Bedingungen, zum Beispiel durch Wärmeausdehnung des Wassererhitzers 3 bei Erwärmung, pendelt sich das System auf die neue, optimale Frequenz ein. Veränderungen durch Montagearbeiten, zum Beispiel an den Wasserleitungen, werden auf diese Weise so gut wie möglich kompensiert. Solange die Ultraschallanordnung in Betrieb ist, können sich die Kalkpartikel nicht als Kesselstein absetzen.

Die Wirkung des Ultraschalls reicht nicht beliebig weit. Einer mangelhaften Wirkung kann entgegengewirkt werden, indem im Rahmen der vorgeschlagenen Erfindung mehrere Ultraschallsender 8 am Wassererhitzer 3 oder an den Leitungen für Wasserzulauf 15a und für Heisswasser 15b angebracht werden. Die Position des Ultraschallempfängers 7 bestimmt das Teil, in dem sich der Ultraschall optimal anpasst. Die Anbringung des Ultraschallempfängers 7 und des Ultraschallsenders 8 am Wassererhitzer 3 im Bereich des Frischwasserzulaufs 15a oder einer besonders gefährdeten Stelle ist deshalb vorteilhaft. Wird der Ultraschallempfänger 7 direkt auf dem Ultraschallsender 8 angeordnet, kann diese Einheit auf besonders durch Kesselsteinablagerungen gefährdete Stellen montiert und an diesem Punkt eine optimale Wirkung bei einfacher Montage erzielt werden.

Der/die Ultraschallsender und -empfänger arbeiten vorzugsweise mit einer Betriebsfrequenz zwischen 40 und 150 kHz, vorzugsweise zwischen 100 und 120 kHz, wobei die dem/den Sender(n) zugeführte Leistung etwa im Bereich zwischen 100 und 250 mW liegt.

Kommt piezokeramisches Material als Ultraschallsender 8 oder Ultraschallempfänger 7 zum Einsatz, ist durch die Curietemperatur des Materials die Einsatztemperatur begrenzt. In diesem Fall kommt vorzugsweise ein wärmedämmendes und schalleitendes Material 10 zwischen dem Gehäuse 5 des Wassererhitzers 3 und dem Ultraschallempfänger 7 und/oder dem Ultraschallsender 8 zum Einsatz, so dass die Temperatur am Ultraschallsender 8 und am Ultraschallempfänger 7 nicht so hoch ist wie am Wassererhitzer 3. Auf diese Weise wird die thermische Belastung des Ultraschallempfängers 7 und des Ultraschallsenders 8 gesenkt. Die Sicherheit gegen Überhitzung wird erhöht. Ist der Wassererhitzer 3 mit einer Temperaturregelung versehen, die eine sichere Temperaturbegrenzung garantiert, kann durch das Einfügen des wärmedämmenden und schalleitenden Materials 10 ein Ultraschallempfänger 7 und ein Ultraschallsender 8 mit geringerer Betriebstemperatur und damit auch eine meistens kostengünstigere Ausführung zum Einsatz kommen. Vorzugsweise besteht das wärmedämmende und schalleitende Material 10 aus einer Glasoder Keramikplatte. Diese Platten können kostengünstig und montagefreundlich mit guten Verwendungseigenschaften gefertigt werden.

Natürlich ist es auch möglich, anstelle des vorgängig beschriebenen Regelkreises einen Ultraschallsender einzusetzen, der in einer vorgegebenen Frequenz angetrieben wird. Wichtig ist einzig und allein, dass dasjenige Objekt, an dem die Kesselsteinablagerung verhindert werden soll, durch Anregen des Ultraschallsenders in seiner Eigenfrequenz angeregt wird bzw. mit dieser schwingt. Ob dies durch eine Regelung oder auf eine andere Art, beispielsweise durch vorgängige Messung oder Berechnung der Eigenfrequenz des Wassererhitzers geschieht, ist von untergeordneter Bedeutung.

Ein weiterer Vorteil der erfindungsgemäss ausgebildeten Vorrichtung gegen Kesselsteinablagerung ist darin zu sehen, dass sie einen hohen Wirkungsgrad aufweist, dass keine vorzeitige bzw. nennenswerte Materialermüdung am Wassererhitzer auftritt und dass keine nennenswerte Schallausstrahlung in die Umgebung stattfindet.

Anstelle eines separaten Senders und Empfängers sind auch Ausführungsbeispiele denkbar, bei denen der Ultraschallsender gleichzeitig als Empfänger eingesetzt wird. Als diesbezügliche Alternative ist auf der linken Seite des Wassererhitzers 3 ein Ultraschallsender 16 zusammen mit einer Auswerteeinheit 17 eingezeichnet. Dieser Ultraschallsender 16 kann beispielsweise zeitversetzt als Empfänger arbeiten, indem er die aufgenommenen Schwingungen (Echo) in elektrische Signale umsetzt, welche von der Auswerteeinheit 17 umgesetzt werden. Alternativ dazu kann die Eigenfrequenz des Wassererhitzers indirekt ermittelt werden, indem beispielsweise die Betriebsfrequenz des Ultraschallgebers 16 soweit angepasst bzw. geregelt wird, bis die Leistungsaufnahme des Ultraschallgebers ein Maximum erreicht hat. In diesem Fall wird die aus Ultraschallgeber 16 und Wassererhitzer 3 bestehende Einheit in der diesem Gebilde zugrunde liegenden Eigenfrequenz betrieben. Falls sich die Eigenfrequenz durch äussere Einflüsse wie beispielsweise Wärmedehnung ändert, pendelt sich das System wieder auf die neue, optimale Frequenz ein. Zur Bestimmung der Leistungsaufnahme des Ultraschallgebers kann beispielsweise der Strom über einem Widerstand in der Speiseleitung des Ultraschallsenders 16 gemessen werden. Zur Messung dieser Stromänderung und zur Nachregelung der Betriebsfrequenz könnte die Auswerteeinheit 17 mit entsprechenden Schaltkreisen versehen werden, welche diese Messung und Nachregelung übernehmen. Die schematisch dargestellte Auswerteeinheit 17 steht stellvertretend für Mittel zur direkten oder indirekten Messung der Leistungsaufnahme des Ultraschallsenders und/oder für Mittel zum Ermitteln der Leistungsaufnahme des Ultraschallsenders 16 und zum Regeln der Betriebsfrequenz desselben.

## Patentansprüche

1. Getränkebereiter, insbesondere Kaffeemaschine mit einem Wassererhitzer (3) und mit einer Vorrichtung (6) gegen Kesselsteinablagerung, die mit zumindest einem am, im Bereich oder innerhalb des Wassererhitzers (3) angeordneten Ultraschallsender (8) versehen ist, **dadurch gekennzeichnet, dass** der Ultraschallsender (8) direkt oder indirekt mit dem Wassererhitzer (4) gekoppelt ist und den Wassererhitzer (4) derart anregt, dass dieser in seiner Eigenfrequenz schwingt.

2. Getränkebereiter nach Anspruch 1, **dadurch gekennzeichnet, dass** die Vorrichtung (6) gegen Kesselsteinablagerung zusätzlich Mittel (7, 16) zur direkten oder indirekten Messung der Frequenz der schwingenden Teile des Wassererhitzers (3) aufweist.

3. Getränkebereiter nach Anspruch 1 oder 2, **dadurch gekennzeichnet, dass** der Ultraschallsender (8, 16) gleichzeitig auch als Ultraschallempfänger eingesetzt wird.

4. Getränkebereiter nach Anspruch 1, **dadurch gekennzeichnet, dass** die Vorrichtung (6) gegen Kesselsteinablagerung Mittel (17) zur direkten oder indirekten Messung der Leistungsaufnahme des Ultraschallsenders aufweist.

5. Getränkebereiter nach Anspruch 1, **dadurch gekennzeichnet, dass** die Vorrichtung (6) gegen Kesselsteinablagerung Mittel (17) zum Ermitteln der Leistungsaufnahme des Ultraschallsenders (16) und zum Regeln der Betriebsfrequenz desselben aufweist.

6. Getränkebereiter nach Anspruch 1, **dadurch gekennzeichnet, dass** die Vorrichtung (6) gegen Kesselsteinablagerung zusätzlich einen direkt oder indirekt mit dem Wassererhitzer gekoppelten Ultraschallempfänger (2) sowie einen Verstärker (9) aufweist, dessen Verstärkereingang (9a) mit dem Ultraschallempfänger (7) und dessen Verstärkerausgang (9b) mit dem Ultraschallsender (8) verbunden ist.

7. Getränkebereiter nach Anspruch 6, **dadurch gekennzeichnet, dass** zwischen dem Ultraschallsender (8) und/oder dem Ultraschallempfänger (7) und der Aussenwandung des Wassererhitzers (3) ein wärrnedämmendes, schallleitendes Material (10) angeordnet ist.

8. Getränkebereiter nach Anspruch 7, **dadurch gekennzeichnet, dass** das wärmedämmende und schallleitende Material (10) aus einer Glas- oder Keramikplatte besteht.

9. Getränkebereiter nach einem der Ansprüche 6 bis 8, **dadurch gekennzeichnet, dass** der Ultraschallempfänger (7) auf dem Ultraschallsender (8) angeordnet ist.

10. Getränkebereiter nach einem der vorhergehenden Ansprüche, **dadurch gekennzeichnet, dass** mehrere Ultraschallsender (8) vorgesehen sind, die an verschiedenen Stellen des Wassererhitzers (8) und/oder der Wasserleitungen (15a, 15b) befestigt sind.

## Claims

1. Beverage making machine, in particular a coffee machine, having a water heater (3) and having an apparatus (6) to prevent limescale deposits, which is provided with at least one ultrasound transmitter (8) which is arranged on, in the area of or within the water heater (3), **characterized in that** the ultrasound transmitter (8) is directly or indirectly coupled to the water heater (4) and causes the water heater (4) to oscillate at its natural frequency.

2. Beverage making machine according to Claim 1, **characterized in that** the apparatus (6) to prevent limescale deposits additionally has means (7, 16) for direct or indirect measurement of the frequency of the oscillating parts of the water heater (3).

3. Beverage making machine according to Claim 1 or 2, **characterized in that** the ultrasound transmitter (8, 16) is at the same time also used as an ultrasound receiver.

4. Beverage making machine according to Claim 1, **characterized in that** the apparatus (6) to prevent limescale deposits has means (17) for direct or indirect measurement of the power consumption of the ultrasound transmitter.

5. Beverage making machine according to Claim 1, **characterized in that** the apparatus (6) to prevent limescale deposits has means (17) for determination of the power consumption of the ultrasound transmitter (16) and for controlling its operating frequency.

6. Beverage making machine according to Claim 1, **characterized in that** the apparatus (6) to prevent limescale deposits additionally has an ultrasound receiver (2), which is directly or indirectly coupled to the water heater, as well as an amplifier (9), whose amplifier input (9a) is connected to the ultrasound receiver (7), and whose amplifier output (9b) is connected to the ultrasound transmitter (8).

7. Beverage making machine according to Claim 6, **characterized in that** a thermally insulating material (10), which conducts sound, is arranged between the ultrasound transmitter (8) and/or the ultrasound receiver (7) and the outer wall of the water heater (3).

8. Beverage making machine according to Claim 7, **characterized in that** the thermally insulating material (10) which conducts sound is in the form of a glass or ceramic panel.

9. Beverage making machine according to one of Claims 6 to 8, **characterized in that** the ultrasound receiver (7) is arranged on the ultrasound transmitter (8).

10. Beverage making machine according to one of the preceding claims, **characterized in that** two or more ultrasound transmitters (8) are provided, and are attached to the water heater (8) and/or to the water pipes (15a, 15b) at different points.

## Revendications

1. Appareil de préparation de boissons, en particulier machine à café, avec un chauffe-eau (3) et avec un dispositif (6) pour inhiber l'entartrage, qui est doté d'au moins un émetteur d'ultrasons (8) disposé sur, dans la zone du chauffe-eau (3) ou à l'intérieur de celui-ci, **caractérisé en ce que** l'émetteur d'ultrasons (8) est couplé directement ou indirectement au chauffe-eau (4) et excite le chauffe-eau (4), de telle sorte que celui-ci vibre dans sa fréquence de résonance.

2. Appareil de préparation de boissons selon la revendication 1, **caractérisé en ce que** le dispositif (6) pour inhiber l'entartrage comprend en outre des moyens (7, 16) destinés à mesurer directement ou indirectement la fréquence des parties vibrantes du chauffe-eau (3).

3. Appareil de préparation de boissons selon la revendication 1 ou 2, **caractérisé en ce que** l'émetteur d'ultrasons (8, 16) est utilisé simultanément également comme récepteur d'ultrasons.

4. Appareil de préparation de boissons selon la revendication 1, **caractérisé en ce que** le dispositif (6) pour inhiber l'entartrage comprend des moyens (17) destinés à mesurer directement ou indirectement la puissance de l'émetteur d'ultrasons.

5. Appareil de préparation de boissons selon la revendication 1, **caractérisé en ce que** le dispositif (6) pour inhiber l'entartrage comprend des moyens (17) destinés à déterminer la puissance de l'émetteur d'ultrasons (16) et à régler la fréquence de service de celui-ci.

6. Appareil de préparation de boissons selon la revendication 1, **caractérisé en ce que** le dispositif (6) pour inhiber l'entartrage comprend en plus un récepteur d'ultrasons (2) couplé directement ou indirectement au chauffe-eau ainsi qu'un amplificateur (9), dont l'entrée d'amplificateur (9a) est reliée au récepteur d'ultrasons (7) et dont la sortie d'amplificateur (9b) est reliée à l'émetteur d'ultrasons (8).

7. Appareil de préparation de boissons selon la revendication 6, **caractérisé en ce qu'**entre l'émetteur d'ultrasons (8) et/ou le récepteur d'ultrasons (7) et la paroi extérieure du chauffe-eau (3) est disposé un matériau (10) isolant, présentant une conductibilité acoustique.

8. Appareil de préparation de boissons selon la revendication 7, **caractérisé en ce que** le matériau (10) isolant et présentant une conductibilité acoustique est constitué d'une plaque de verre ou de céramique.

9. Appareil de préparation de boissons selon l'une des revendications 6 à 8, **caractérisé en ce que** le récepteur d'ultrasons (7) est disposé sur l'émetteur d'ultrasons (8).

10. Appareil de préparation de boissons selon l'une des revendications précédentes, **caractérisé en ce que** plusieurs émetteurs d'ultrasons (8) sont prévus, qui sont fixés à différents emplacements du chauffe-eau (8) et/ou des conduites d'eau (15a, 15b).
